# EUROPÄISCHE PATENTSCHRIFT

(11) **EP 1 844 353 B1**
(45) Veröffentlichungstag und Bekanntmachung des Hinweises auf die Patenterteilung: **03.04.2013**
(21) Anmeldenummer: 06705819.8
(22) Anmeldetag: 19.01.2006
(51) Int. Cl.: G02B 6/00, B29D 11/00, B29C 45/14, G02B 5/20, G02B 1/10

(54) **OPTISCHES ELEMENT UND VERFAHREN ZU DESSEN HERSTELLUNG**
OPTICAL ELEMENT AND METHOD FOR THE PRODUCTION THEREOF
ELEMENT OPTIQUE ET PROCEDE DE PRODUCTION DE CET ELEMENT

(30) Priorität: 31.01.2005 DE 102005004447; 14.02.2005 DE 102005006635
(43) Veröffentlichungstag der Anmeldung: 17.10.2007
(73) Patentinhaber: OSRAM Opto Semiconductors GmbH, 93055 Regensburg (DE)
(72) Erfinder: WANNINGER, Mario, 93055 Regensburg (DE)
(74) Vertreter: Epping, Wilhelm
(86) Internationale Anmeldenummer: PCT/DE2006/000081
(87) Internationale Veröffentlichungsnummer: WO 2006/079316

(56) Entgegenhaltungen:
- DE-A1- 3 406 393
- DE-A1- 4 404 425
- DE-A1- 19 858 849
- US-A- 5 642 453
- US-A1- 2003 214 080
- US-A1- 2004 062 028
- US-A1- 2004 062 513

## Beschreibung

Die Erfindung betrifft ein optisches Element sowie ein Verfahren zu dessen Herstellung.

Aus der Offenlegungsschrift DE 44 040 425 A1 ist eine Vorrichtung zur diffusen Ausleuchtung transparenter Flächen oder Körper bekannt. Um auch mit schwachen Lichtquellen eine gute diffuse Ausleuchtung zu erreichen, weist die Vorrichtung zumindest eine Lichtquelle auf, die an einem Kern der Vorrichtung angebracht ist und die in das Innere hineinleuchtet. Eine teilweise transparente Schicht und eine zumindest teilweise reflektierende Schicht sind auf dem Kern angebracht.

Die Druckschrift DE 34 06 393 A1 betrifft ein Verfahren zur Herstellung einer Mattscheibe.

In der Druckschrift US 5,642,453 A ist ein optischer Wellenleiter zur Wellenlängenänderung angegeben.

Eine Leuchte ist in der Druckschrift US 2004/0062028 A1 offenbart.

Aufgaben der vorliegenden Erfindung sind, ein optisches Element, das besonders vielfältig einsetzbar ist, sowie ein Verfahren zu dessen Herstellung anzugeben.

Diese Aufgaben werden durch ein optisches Element mit den Merkmalen des Patentanspruchs 1 und durch ein Verfahren mit den Merkmalen des Patentanspruchs 2 gelöst. Vorteilhafte Ausgestaltungen von dem Verfahren sind Gegenstand der abhängigen Patentansprüche.

Ein erfindungsgemäßes optisches Element, das vorzugsweise zur Führung von monochromer oder polychromer elektromagnetischer Strahlung ausgebildet ist, weist einen Grundkörper und mindestens eine Folie auf. Die Folie haftet in einer innigen Verbindung auf dem Grundkörper und ist derart angeordnet, dass sie von der elektromagnetischen Strahlung durchstrahlt wird.

Ein solches optisches Element zur Führung von elektromagnetischer Strahlung, besonders bevorzugt im sichtbaren Bereich, kann sich aus einem Grundkörper und einer Folie zusammensetzen.

Die Strahlung, die durch das optische Element geführt wird, tritt an einer Strahlungseintrittsfläche ein und an einer Strahlungsaustrittsfläche aus. Die Strahlungsaustrittsfläche kann parallel oder senkrecht zur Strahlungseintrittsfläche angeordnet sein. Beide Flächen sind Teil der Oberfläche des optischen Elements.

Vorteilhafterweise ist der Grundkörper aus einem transparenten Material gebildet. Als transparente Materialien, die strahlungsdurchlässig sind und Strahlung nicht streuen, können beispielsweise Epoxidharze, Acrylharze, Silikonharze oder Mischungen dieser Harze verwendet werden. Jedoch kann der Grundkörper auch ein optisch wirksames Material aufweisen. Ein optisch wirksames Material kann beispielsweise Partikel zur Umwandlung der Strahlung in Strahlung einer anderen Wellenlänge oder zur Streuung enthalten.

Besonders bevorzugt ist der Grundkörper als Wellenleiter ausgebildet und eignet sich in Kombination mit der Folie beispielsweise zur homogenen Hinterleuchtung einer Anzeigevorrichtung, beispielsweise eines LCDs, beziehungsweise zur Formung der Strahlung.

Es haftet die Folie in inniger Verbindung an der Oberfläche des Grundkörpers, wobei keine haftvermittelnde Zwischenschicht, beispielsweise ein Klebstoff, benötigt wird.

Die Folie ist auf einer bzw. mehreren Seitenflächen angeordnet: bei einem optischen Element in Form eines Wellenleiters ist dies zweckmäßig.

Es wird die Folie von der Strahlung durchstrahlt, die durch den Grundkörper geführt wird. Dabei erweisen sich transparente oder transluzente Materialien für die Folie als vorteilhaft. Im Gegensatz zu transparenten Materialien können transluzente Materialien die Strahlung zumindest teilweise streuen.

Ferner ist die Folie eine optisch wirksame Folie, was bedeutet, dass mit Hilfe der Folie Eigenschaften der Strahlung verändert werden. Gemäß der Erfindung wird die Wellenlänge der Strahlung beeinflusst.

Es enthält die Folie einer Leuchtstoff, um die Strahlung in Strahlung einer anderen Wellenlänge umzuwandeln.

Die innige Verbindung zwischen der Folie und dem Grundkörper erweist sich hierbei für die Intensität der ausgekoppelten Strahlung als besonders vorteilhaft. Denn durch die innige Verbindung wird im Gegensatz zu einer Befestigung der Folie mittels einer mechanischen Halterung ein Luftspalt vermieden, wodurch Strahlungsverluste reduziert beziehungsweise Totalreflexionen vermindert werden können.

Die Folie kann transparent oder transluzent sein. Der Folie wird eine Reflektorfolie nachgeordnet.

Zwischen der Folie und der Reflektorfolie wird dabei ein Luftspalt ausgebildet.

Strahlungsanteile, deren Einfallswinkel (relativ zur Oberflächennormale) größer als der Totalreflexionswinkel ist, werden vorteilhafterweise am Übergang von der Folie, dem optisch dichteren Medium, zur Umgebung, in der Regel Luft, dem optisch dünneren Medium, totalreflektiert. Der Teil der Strahlung, der den Luftspalt durchdringt, kann an der nachgeordneten Reflektorfolie reflektiert werden. Somit kann ein großer Teil der Strahlung, der auf die Seitenflächen des Grundkörpers trifft, reflektiert und insgesamt die Strahlung verlustarm durch den Grundkörper geführt werden. Durch diese bevorzugte Anordnung kann also der Reflexionsgrad erhöht werden, was sich positiv auf die Leuchtdichte des optischen Elements auswirkt.

Eine Verwendung der zuletzt genannten Anordnung als Wellenleiter kann beispielsweise bei der Visualisierung von Daten in mobilen und tragbaren elektronischen Geräten zum Einsatz kommen, wobei die Technik der Flachbildschirme ("Flat Panel Displays") eine wichtige Rolle spielt. Flachbildschirme können als Flüssigkristall-Anzeige (LC-Display) realisiert sein. Diese Technologie zeichnet sich durch kostengünstige Herstellbarkeit, geringe elektrischer Leistungsaufnahme, kleines Gewicht und geringen Platzbedarf aus. Allerdings sind LC-Displays nicht selbstemittierend und bedürfen daher einer Hinterleuchtung, die beispielsweise mit der Erfindung, die sich durch eine hohe Leuchtdichte des optischen Elements auszeichnet, optimal realisiert werden kann. Vorteil bei dieser Art der Realisierung ist der Einsatz passiver Elemente, beispielsweise einer Anordnung aus Folie-Luftspalt-Reflektorfolie, zur Steigerung des Reflexionsgrades im Gegensatz zum Einsatz zusätzlicher aktiver Elemente, beispielsweise von LEDs, die weiterer Energie bedürften.

Bei der Herstellung eines optischen Elements wird im Rahmen der Erfindung zunächst die Folie in eine Spritzgussform eingelegt. Dann wird beispielsweise mit Hilfe einer Spritzdüse in die Spritzgussform ein Füllmaterial eingefüllt, wobei eine innige Verbindung zwischen dem Füllmaterial und der Folie ausgebildet wird. Der Grundkörper wird dabei aus dem Füllmaterial hergestellt, das vorzugsweise ein transparentes Material ist. Denkbar ist allerdings auch, dass das Füllmaterial Partikel enthält, beispielsweise zur Streuung oder zur Umwandlung der Wellenlänge der Strahlung.

Das optische Element wird entformt, sobald das Gießmaterial auf ausreichende Entformfestigkeit abgekühlt ist, was vorteilhafter Weise ohne wesentliche Wartezeit nach der Herstellung erfolgen kann.

Weitere Merkmale, Vorteile und Weiterbildungen eines optischen Elements ergeben sich aus den nachfolgend in Verbindung mit den Figuren 1 bis 3 erläuterten Ausführungsbeispielen. Es zeigen:
- Figur 1: eine perspektivische Seitenansicht einer Abwandlung eines optischen Elements,
- Figur 2a: eine perspektivische Schnittansicht eines Ausführungsbeispiels eines optischen Elements,
- Figur 2b: eine perspektivische Seitenansicht einer weiteren Abwandlung eines optischen Elements,
- Figur 3: eine perspektivische Seitenansicht einer weiteren Abwandlung eines optischen Elements.

In den Figuren sind gleiche oder gleichwirkende Bestandteile jeweils mit den gleichen Bezugszeichen versehen.

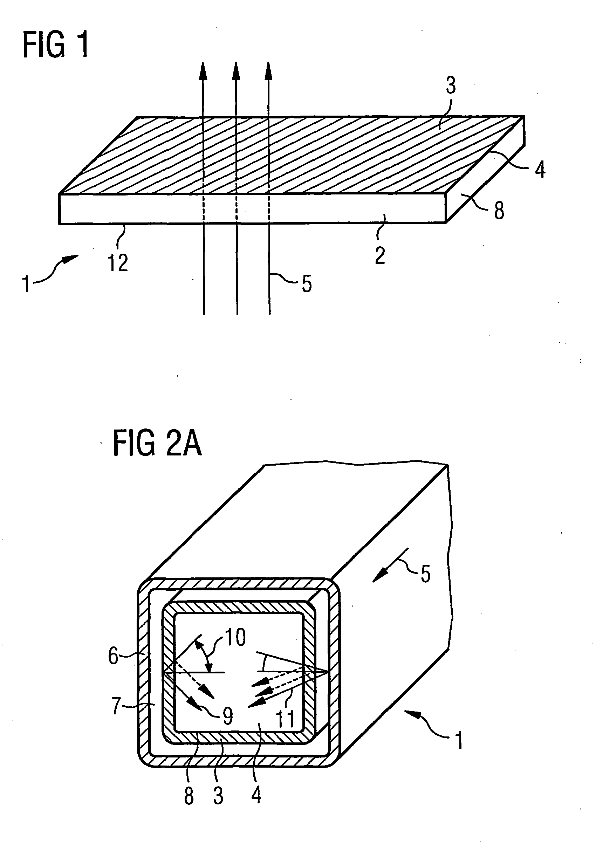

In Figur 1 ist eine Abwandlung eines optischen Elements 1 schematisch dargestellt. Das optische Element 1 ist dabei als flächiger, plattenförmiger Wellenleiter ausgebildet. Der Wellenleiter weist einen Grundkörper 2 und eine Folie 3 auf.

Der Grundkörper 2 enthält vorzugsweise ein transparentes Material, beispielsweise ein Epoxidharz, Acrylharz, Silikonharz oder Mischungen dieser Harze. Denkbar ist auch, dass das Material Partikel enthält, beispielsweise Farbstoffe zur Veränderung der Wellenlänge der Strahlung 5, die in den Grundkörper eingekoppelt wird.

Die Folie 3 ist besonders bevorzugt aus einem zumindest teilweise transparenten Material hergestellt. Beispielsweise kann sie eine Struktur mit der Wirkung einer Linse aufweisen. Zur Veränderung der Wellenlänge der Strahlung 5 kann sie Farbstoffe enthalten. Aber auch Partikel zur Streuung der Strahlung sind möglich.

Die elektromagnetische Strahlung 5, vorzugsweise im sichtbaren Bereich, wird von einer Strahlungsquelle (nicht gezeigt), vorzugsweise einer oder mehreren LEDs, emittiert.

Die monochrome oder polychrome elektromagnetische Strahlung 5 wird über die Strahlungseintrittsfläche 12 in das optische Element 1 eingekoppelt und homogen über die rechteckige Fläche verteilt. Die Strahlung durchstrahlt den Grundkörper 2 und die Folie 3 und tritt durch die Strahlungsaustrittsfläche 4 aus, die parallel zur Strahlungseintrittsfläche 12 angeordnet ist. Alternativ könnte die Strahlungsaustrittsfläche 4 auch senkrecht zur Strahlungseintrittsfläche angeordnet sein, die sich dann beispielsweise auf der Seitenfläche 8 des Grundkörpers 2 befinden würde. Bei letzterer Anordnung würde die Einkopplung der Strahlung in Längsrichtung des optischen Elements 1 erfolgen.

Durch den flächigen Wellenleiter kann beispielsweise eine dem optischen Element 1 nachgeordnete Anzeigevorrichtung (nicht gezeigt) homogen ausgeleuchtet werden.

Beim Ausführungsbeispiel, dargestellt in Figur 2a, ist das optische Element 1 als strangförmiger Wellenleiter ausgebildet. Der strangförmige Wellenleiter weist einen Grundkörper 2, eine Folie 3 und eine Reflektorfolie 6 auf, die der Folie 3 nachgeordnet ist. Die Folie 3 und die Reflektorfolie 6 umgeben den Grundkörper 2 in der Schnittansicht ring- oder rahmenartig.

Auf der Seitenfläche 8 des Grundkörpers 2 haftet die Folie 3 in einer innigen Verbindung. Diese innige Verbindung kommt allein durch das Hinterspritzen der Folie 3 mit einem beispielsweise transparenten Material, aus dem der Grundkörper 2 gebildet ist, zustande und bedarf vorteilhafterweise keiner haftvermittelnden Zwischenschicht zwischen der Folie 3 und dem Grundkörper.

Der Folie 3 ist die Reflektorfolie 6 nachgeordnet, und zwar wird diese auf die Folie 3 gelegt, ohne dabei die Haftung aufgrund der Kräfte, die zwischen den beiden Folien wirken, zu verstärken. Bei dieser Art der Anordnung wird zwischen den beiden Folien ein Luftspalt 7 ausgebildet.

Vorzugsweise enthält der Grundkörper 2 wie im ersten Ausführungsbeispiel ein transparentes oder teilweise transparentes Material, in dem sich Partikel mit oben genannter Wirkung befinden können.

Für die Folie 3 wird vorteilhafterweise ein transparentes oder transluzentes Material verwendet.

Von einer strahlungsemittierenden Quelle (nicht gezeigt) her kommend, durchquert die Strahlung 5 den strangartigen Wellenleiter und wird dabei zur Mitte des Grundkörpers reflektiert, sobald sie auf die Seitenfläche 8 des Grundkörpers trifft.

Wie in Figur 2a gezeigt kann die Strahlung günstiger Weise an zwei Stellen reflektiert werden: an der Folie 3, die an den Luftspalt 7 grenzt, und an der Reflektorfolie 6.

Da das Material der Folie 3 einen höheren Brechungsindex aufweist als Luft, kann am Übergang zwischen der Folie 3 und dem Luftspalt 7 die Strahlung, die unter einem Winkel 10, der gleich groß oder größer als der Winkel der Totalreflexion ist, auf die Folie 3 trifft, totalreflektiert werden (totalreflektierte Strahlung 9).

Der Anteil der Strahlung, der unter einem kleineren Winkel als dem Winkel der Totalreflexion auf die Folie 3 auftrifft, kann an der Folie 3 teilweise reflektiert werden oder den Luftspalt 7 durchdringen. Der Anteil der Strahlung, der die Folie 3 durchstrahlt, kann an der nachgeordneten Reflektorfolie 6 reflektiert werden (reflektierte Strahlung 11).

Insgesamt kann so durch die zweilagige Folien-Anordnung ein hoher Reflexionsgrad erzielt werden.

Die elektromagnetische Strahlung 5 wird durch den Wellenleiter geführt und über die Strahlungsaustrittsfläche 4 aus dem Wellenleiter ausgekoppelt.

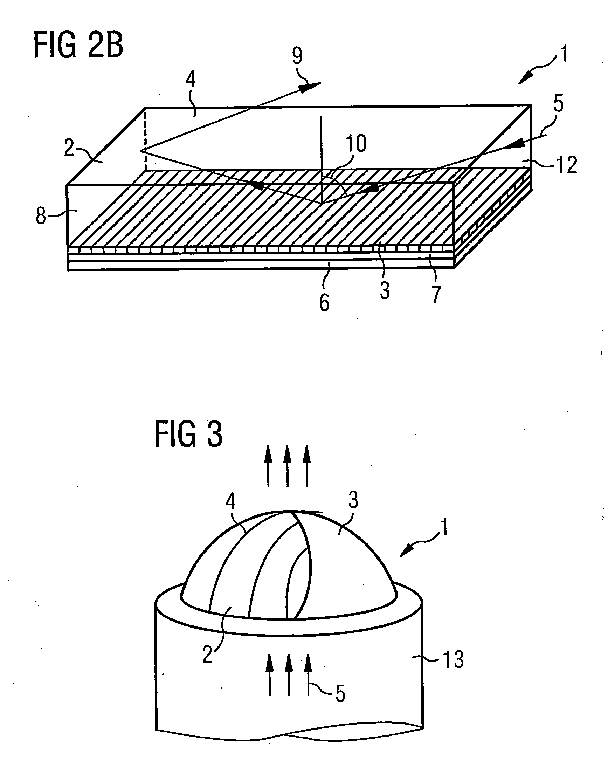

In Figur 2b ist eine weitere Abwandlung eines optischen Elements 1 dargestellt. Das optische Element 1 ist dabei als flächiger, plattenförmiger Wellenleiter ausgebildet. Der Wellenleiter weist einen Grundkörper 2 und mindestens zwei Folien auf. Die Folie 3 und die Reflektorfolie 6 sind auf der der Strahlungsaustrittsfläche 4 gegenüberliegenden Seite angeordnet. Wie im Ausführungsbeispiel besteht zwischen diesen beiden Folien ein Luftspalt 7. Für die Reflexion der Strahlung an den Folien gelten die gleichen physikalischen Verhältnisse.

Exemplarisch ist ein Strahlengang eingezeichnet. Dabei wird die elektromagnetische Strahlung 5 durch die Strahlungseintrittsfläche 12 in das optische Element 1 eingekoppelt. Die elektromagnetische Strahlung 5 durchstrahlt den Grundkörper 2. Die Strahlung, die unter einem Winkel 10, der gleich groß oder größer als der Winkel der Totalreflexion ist, auf die Folie 3 trifft, wird totalreflektiert. Die totalreflektierte Strahlung kann ferner auf eine Seitenfläche 8 treffen und erneut reflektiert werden, bevor sie an der Strahlungsaustrittsfläche 4 aus dem optischen Element 1 austritt.

In einer bevorzugten Abwandlung sind zusätzlich auf einer oder mehreren Seitenflächen eine Folie und eine Reflektorfolie mit einem Luftspalt dazwischen aufgebracht (nicht dargestellt), so dass die Strahlung, die unter einem Winkel auf die Seitenfläche 8 auftrifft, der gleich groß oder größer ist als der Winkel der Totalreflexion, totalreflektiert wird.

Weiterhin kann auch auf der Strahlungseintrittsfläche eine optisch wirksame Folie angeordnet sein (nicht dargestellt).

Insgesamt kann so durch die zweilagige Folien-Anordnung ein hoher Reflexionsgrad erzielt werden.

Die Figur 3 zeigt eine weitere Abwandlung eines optischen Elements 1. Dargestellt ist eine perspektivische Seitenansicht eines optischen Elements 1.

Ein Träger 13 weist auf seiner Oberfläche einen Grundkörper 2 eines optischen Elements in Form eines kuppelförmigen Aufsatzes auf. Dieser vorzugsweise sphärisch gekrümmte Aufsatz ist mit einer Folie 3 bedeckt, die sich in einer innigen Verbindung an die Oberfläche des Aufsatzes 11 schmiegt.

Der Träger 13 weist beispielsweise eine zylindrische Form auf. Er kann als metallischer Hohlzylinder, der im Innenraum mit Luft gefüllt ist, ausgebildet sein oder im Innenraum ein transparentes Material, beispielsweise ein Epoxidharz, Acrylharz, Silikonharz oder eine Mischung dieser Harze, aufweisen, das beispielsweise mit einer Reflektorfolie an der Oberfläche zur Umgebung abschließt.

Durch einen solchen Träger kann elektromagnetische Strahlung 5, vorzugsweise im sichtbaren Bereich, vorteilhaft durchgeleitet werden. Die Hauptrichtung der Strahlung, die durch den Träger 13 geführt wird, verläuft dabei parallel zur Außenwand des Trägers 13.

Am Ende des Trägers 13 trifft die Strahlung auf den Grundkörper 2. Dieser Grundkörper 2 enthält vorzugsweise ein transparentes Material und ist beispielsweise in Form einer Sammellinse ausgebildet. Die durch den Träger 13 geführte Strahlung 5 kann somit eine bestimmte Formung erhalten. Beispielsweise kann ein paralleles Strahlenbündel, das vom Träger auf die Sammellinse trifft, auf einen Punkt fokussiert werden, der dem optischen Element nachgeordnet ist.

Die Folie 3, die auf dem Aufsatz 11 in einer innigen Verbindung haftet, ist vorzugsweise eine optisch wirksame Folie, d.h. sie kann transparent sein oder Partikel, beispielsweise zur weiteren Strahlformung oder zur Farbänderung der einfallenden Strahlung enthalten.

Als vorteilhaft erweist sich die innige Verbindung zwischen der Linse 3, die auch eine Zerstreuungslinse sein kann, und der optisch aktiven Folie 3, weil dadurch Strahlungsverluste vermieden werden können, die auftreten, wenn die Folie beispielsweise mittels eines Klebers auf den Grundkörper aufgebracht ist.

## Patentansprüche

1. Optisches Element (1) zur Führung von elektromagnetischer Strahlung (5) aufweisend
- einen Grundkörper (2);
- eine transparente oder transluzente Folie (3), die auf einer Seitenfläche des Grundkörpers (2) haftet und mit dem Grundkörper (2) eine innige Verbindung bildet, wobei die Folie (3) derart angeordnet ist, dass sie von der elektromagnetischen Strahlung (5) durchstrahlt wird, und
- eine Reflektorfolie (6), die der transparenten oder transluzenten Folie (3) nachgeordnet ist,
wobei die transparente oder transluzente Folie (3) und die Reflektorfolie (6) den Grundkörper (2) ring- oder rahmenartig umgeben, **dadurch gekennzeichnet dass** zwischen der transparenten oder transluzenten Folie (3) und der Reflektorfolie (6) ein Luftspalt (7) besteht,
und dass
die Folie (3) eine optisch wirksame Folie ist, wobei die Folie einen Leuchtstoff enthält, der die Strahlung (5) in eine Strahlung einer anderen Wellenlänge umwandelt, und
das optische Element (1) als strangförmiger Wellenleiter ausgebildet ist.

2. Verfahren zur Herstellung eines optischen Elements (1) gemäß Anspruch 1, wobei das Verfahren durch die folgenden Schritte gekennzeichnet ist:
- Einlegen der transparenten oder transluzenten Folie (3) in eine Spritzgussform,
- Füllen der Spritzgussform mit einem Füllmaterial zur Bildung des Grundkörpers (2), wobei eine innige Verbindung zwischen dem Füllmaterial und der transparenten oder transluzenten Folie (3) ausgebildet wird,
- Anordnen der Reflektorfolie (6) auf der transparenten oder transluzenten Folie (3), so dass ein Luftspalt (7) zwischen der transparenten oder transluzenten Folie (3) und der Reflektorfolie (6) besteht.

3. Verfahren gemäß Anspruch 2,
**dadurch gekennzeichnet, dass**
das Füllmaterial ein transparentes Material ist.

4. Verfahren gemäß Anspruch 2,
**dadurch gekennzeichnet, dass**
das Füllmaterial Partikel zur Streuung der elektromagnetischen Strahlungen enthält.

## Claims

1. Optical element (1) for guiding electromagnetic radiation (5) comprising
- a main body (2);
- a transparent or translucent film (3), which adheres on a side face of the main body (2) and forms an intimate connection with the main body (2), wherein the film (3) is arranged in such a way that the electromagnetic radiation (5) radiates through it, and
- a reflector film (6) disposed downstream of the transparent or translucent film (3),
wherein the transparent or translucent film (3) and the reflector film (6) surround the main body (2) in a ring- or frame-like manner, **characterized in that** there is an air gap (7) between the transparent or translucent film (3) and the reflector film (6), and **in that** the film (3) is an optically active film, wherein the film contains a phosphor, which converts the radiation (5) into a radiation having a different wavelength, and the optical element (1) is embodied as a rope-shaped waveguide.

2. Method for producing an optical element (1) according to Claim 1, wherein the method is **characterized by** the following steps:
- inserting the transparent or translucent film (3) into an injection mould,
- filling the injection mould with a filling material for forming the main body (2), wherein an intimate connection is formed between the filling material and the transparent or translucent film (3),
- arranging the reflector film (6) on the transparent or translucent film (3), such that there is an air gap (7) between the transparent or translucent film (3) and the reflector film (6).

3. Method according to Claim 2,
**characterized in that**
the filling material is a transparent material.

4. Method according to Claim 2,
**characterized in that**
the filling material contains particles for scattering the electromagnetic radiations.

## Revendications

1. Elément optique (1) destiné à guider un rayonnement électromagnétique (5) et présentant :
un corps de base (2),
un film transparent ou translucide (3) qui adhère à une surface latérale du corps de base (2) et qui forme une liaison intime avec le corps de base (2), le film (3) étant disposé de manière à être traversé par le rayonnement électromagnétique (5) et
un film réfléchissant (6) qui suit le film transparent ou translucide (3),
le film transparent ou translucide (3) et le film réfléchissant (6) entourant le corps de base (2) en forme d'anneau ou d'encadrement,
**caractérisé en ce qu'**un entrefer (7) est formé entre le film transparent ou translucide (3) et le film réfléchissant (6)
et **en ce que** le film (3) est un film optiquement actif, le film contenant une substance luminescente qui convertit le rayonnement (5) en un rayonnement d'une autre longueur d'onde et
l'élément optique (1) étant configuré comme guide d'onde en forme de corde.

2. Procédé de fabrication d'un élément optique (1) selon la revendication 1, le procédé étant **caractérisé par** les étapes suivantes :
placement du film transparent ou translucide (3) dans un moule de moulage par injection,
remplissage du moule de moulage par injection par un matériau de charge en vue de former le corps de base (2) en formant une liaison intime entre le matériau de charge et le film transparent ou translucide (3) et
placement du film réfléchissant (6) sur le film transparent ou translucide (3) de manière à former un entrefer (7) entre le film transparent ou translucide (3) et le film réfléchissant (6).

3. Procédé selon la revendication 2, **caractérisé en ce que** le matériau de charge est un matériau transparent.

4. Procédé selon la revendication 2, **caractérisé en ce que** le matériau de charge contient des particules qui diffusent les rayonnements électromagnétiques.
